# EUROPÄISCHE PATENTSCHRIFT

(11) **EP 0 868 395 B1**
(45) Veröffentlichungstag und Bekanntmachung des Hinweises auf die Patenterteilung: **26.05.1999**
(21) Anmeldenummer: 96946084.9
(22) Anmeldetag: 16.12.1996
(51) Int. Cl.: C01B 5/00, G21C 19/37, B01D 53/86

(54) **VORRICHTUNG ZUR ENTFERNUNG VON WASSERSTOFF AUS EINEM GASGEMISCH UND ANWENDUNG DER VORRICHTUNG**
DEVICE FOR REMOVING HYDROGEN FROM A GAS MIXTURE AND ITS USE
DISPOSITIF PERMETTANT D'EXTRAIRE L'HYDROGENE CONTENU DANS UN MELANGE GAZEUX ET UTILISATION DUDIT DISPOSITIF

(30) Priorität: 22.12.1995 DE 19548235
(43) Veröffentlichungstag der Anmeldung: 07.10.1998
(73) Patentinhaber: FORSCHUNGSZENTRUM JÜLICH GMBH, 52425 Jülich (DE)
(72) Erfinder: FÜRST, Leander, D-52428 Jülich (DE); NEUMEISTER, Herbert, D-52428 Jülich (DE); FLUCHT, Reinhold, D-52428 Jülich (DE)
(86) Internationale Anmeldenummer: DE9602418
(87) Internationale Veröffentlichungsnummer: WO9723412

(56) Entgegenhaltungen:
- EP-A- 0 314 129
- EP-A- 0 467 110
- WO-A-95/00957
- DE-A- 4 032 247
- DE-A- 4 142 554
- PATENT ABSTRACTS OF JAPAN vol. 8, no. 132 (M-303), 20.Juni 1984 & JP 59 034413 A (KOGATA GAS REIBOU GIJUTSU KENKIYUU KUMIAI), 24.Februar 1984,

## Beschreibung

Die Erfindung bezieht sich auf eine Vorrichtung zur Entfernung von Wasserstoff aus einem Gasgemisch, das freien Wasserstoff und Sauerstoff enthält, durch katalytische Oxidation des Wasserstoffs. Hierzu ist in einem zur Oxidation geeigneten Reaktionsraum ein Trägerkörper befestigt, der auf seiner Oberfläche mit katalytisch wirksamem Material beschichtet ist. Der Trägerkörper dient nicht nur als Katalysatorträger, er dient vor allem zur Ableitung der bei der exothermen katalytischen Wasserstoffoxidation freiwerdenden Reaktionswärme. Das Gasgemisch wird in den Reaktionsraum über einen Zugang eingeführt, das Restgas, das nach der Oxidation des Wasserstoffs bleibt, strömt über einen Ausgang aus dem Reaktionsraum ab. Gegenstand der Erfindung ist auch eine Anwendung der Vorrichtung.

Ein katalytischer Umsatz von Wasserstoff, der sich in einem Wasserstoff und Sauerstoff enthaltenden, explosionsgefährdeten Gasgemisch befindet, ist bekannt. Durch katalytische Oxidation ist es möglich, eine Knallgasexplosion in der Gasphase zu verhindern. Die Katalyse muß dann unterhalb der Zündtemperatur des Gasgemisches durchgeführt werden, bei Atmosphärendruck also unterhalb von ca. 600°C. Um einen Temperaturanstieg über diese Zündtemperatur hinaus zu vermeiden, ist es notwendig, eine ausreichende Wärmeabfuhr zu gewährleisten. Enthält das Gasgemisch neben den Reaktionspartnern Wasserstoff und Sauerstoff auch noch an der Reaktion unbeteiligte Inertgasanteile, z.B. Stickstoff, so wird Wärme auch zur Aufheizung dieser Inertgasanteile verbraucht. Durch Zumischen von Luft zum Gasgemisch läßt sich somit die Gasgemischtemperatur im Reaktionsraum einstellen. Die Temperatur auf der Oberfläche des Trägerkörpers wird über 100° gehalten, damit bei der Reaktion gebildeter Wasserdampf auf der Trägerkörperoberfläche nicht kondensieren kann. Wasserfilme auf der katalytisch wirkenden Oberfläche setzen nämlich deren katalytische Aktivität herab.

Eine Katalyse in flüssiger Phase wird in einer Veröffentlichung von R. Wagner et al, 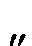 Catalytic removal of dissolved oxygen from water", Ion Exch. Adv., Proc. IEX 92, 1992, S. 144/150, beschrieben. In der Veröffentlichung wird ein Verfahren zur Bindung gelösten Sauerstoffs in Wasser durch Einleiten von Wasserstoffgas angegeben. Die dabei ablaufende katalytische Reaktion ist selbstverständlich auch zur Bindung von Wasserstoff nutzbar. Als Katalysatoren werden Platin und Palladium (auf Trägerkörpern aus Aktivkohle, Aluminiumoxyd oder Anionenaustauscherharz) eingesetzt. Um einen ausreichenden Umsatz auf den unter Wasser angeordneten Trägerkörpern zu erreichen, müssen die Gase im Wasser gelöst vorliegen. Jedoch bleibt die Umsatzrate bei Raumtemperatur im Wasserbad, aber auch bei höheren Wassertemperaturen gering, für eine Anwendung sind somit große Katalysatoroberflächen erforderlich. Die Reaktionswärme wird vom Wasserbad aufgenommen.

Gasgemische, die freien Wasserstoff und Sauerstoff in stöchiometrischem Verhältnis aufweisen und deshalb äußerst explosibel sind, werden beispielsweise bei elektrolytischer Herstellung von Reinstwasser erzeugt. Bei solchen Prozessen die vorbeschriebenen bekannten Verfahren zur Wasserstoffoxidation anzuwenden, bedeutet jedoch erheblichen Aufwand, s. hierzu IPAD-Catalyst 25/250 D und DE-OS 3909540 Al.

Aufgabe der Erfindung ist es, einerseits eine hohe Umsatzrate für die katalytische Wasserstoffoxidation zu erhalten, zugleich aber auch eine ausreichende Wärmeabfuhr zu gewährleisten.

Diese Aufgabe wird bei einer Vorrichtung der eingangs genannten Art gemäß der Erfindung durch zwei in Patentansprüchen 1 und 3 aufgeführte alternative Ausbildungen gelöst.

Nach Patentanspruch 1 taucht der im Reaktionsraum befestigte Trägerkörper mit einem Teil seiner katalytisch wirksamen Oberfläche in ein Flüssigkeitsbad ein, das eine Temperatur unterhalb der Kondensationstemperatur des im Reaktionsraum gebildeten Wasserdampfes aufweist, wobei ein Flüssigkeitszulauf für das Flüssigkeitsbad zugleich als Zugang für das in den Reaktionsraum einzuführende Gasgemisch und ein Flüssigkeitsablauf zugleich als Ausgang für das Restgas dient, das nach der Oxydationsreaktion noch verbleibt. Sowohl der Flüssigkeitszulauf als auch der Flüssigkeitsablauf für das Flüssigkeitsbad sind unterhalb des Flüssigkeitsspiegels im Reaktionsraum angeordnet. Der Innendruck im Reaktorraum ist insbesondere über ein im Flüssigkeitsablauf eingesetztes Ventil regulierbar.

In der in dieser Weise ausgebildeten Vorrichtung sammelt sich das Wasserstoff und Sauerstoff enthaltende Gasgemisch, das über den Flüssigkeitszulauf zusammen mit der Flüssigkeit eingeführt wird, im Reaktionsraum oberhalb des Flüssigkeitsspiegels und kommt hier mit der Oberfläche des Trägerkörpers in Berührung, an der sich Wasserstoff und Sauerstoff katalytisch umsetzen. Auf Grund der eingestellten Temperatur im Flüssigkeitsbad unterhalb der Kondensationstemperatur des Wassers kondensiert das gebildete Wasser auf der Flüssigkeitsoberfläche und in solchen Bereichen des Trägerkörpers, die eine Temperatur unterhalb der Kondensationstemperatur des Wasserdampfes aufweisen. Die Reaktionswärme wird vom Trägerkörper in das Flüssigkeitsbad eingeleitet. Vorteilhaft ist dabei, daß die katalytische Oxidation oberhalb des Flüssigkeitsspiegels an der Oberfläche des Trägerkörpers bei erhöhter Temperatur ablaufen kann und somit ein hoher Umsatz erreicht wird, wobei sich selbsttätig ein Gleichgewicht zwischen Wasserstoffoxidation und Ableitung der entstehenden Reaktionswärme in das Flüssigkeitsbad einstellt. Eine selbsttätige Regelung ist auch deshalb gegeben, weil bei hohem Umsatz und Niederschlag der dabei gebildeten Wassermenge das Volumen des Gasgemisches im Reaktionsraum abnimmt und somit der Flüssigkeitsspiegel ansteigt. Das auf diese Weise vergrößerte Flüssigkeitsvolumen sorgt seinerseits für eine verstärkte Wärmeabfuhr, die eine örtliche Überhitzung der Trägerkörperoberfläche verhindert und die Temperatur im Trägerkörper senkt. Bei nunmehr geringerem Umsatz an der jetzt kleineren Katalysatoroberfläche nimmt das Gasvolumen im Reaktionsraum wieder zu, gibt eine größere katalytisch wirksame Oberfläche frei und läßt die Umsatzrate wieder ansteigen. Diese Selbstregulation im Reaktionsraum ermöglicht es, auch schwankende Konzentrationen von Wasserstoff im Gasgemisch zu beseitigen ohne eine Überhitzung der Trägerkörperoberfläche über die Zündtemperatur hinaus in Kauf nehmen zu müssen. Sind die äußeren Bedingungen, insbesondere die Wasserstoffkonzentration im Gasgemisch konstant, stellt sich ein stabiler Zustand zwischen katalytischer Reaktion (Rekombination) und Wärmeabfuhr ein. Im Reaktionsraum ergibt sich durch die Wasserstoffoxidation ein definierter, im wesentlichen von der Temperatur im Flüssigkeitsbad abhängiger Wasserdampfdruck. Bevorzugt wird als Flüssigkeitsbad für den Trägerkörper ein Wasserbad genutzt, Patentanspruch 2.

Alternativ zur Vorrichtung nach Patentanspruch 1 ist der Trägerkörper gemäß Patentanspruch 3 mit einem Kühler zur Wärmeabfuhr verbunden, der einen Teil der katalytisch wirksamen Oberfläche des Trägerkörpers auf eine Temperatur kühlt, die unterhalb der Kondensationstemperatur des im Reaktionsraum gebildeten Wasserdampfes liegt. Während ein Teil der Oberfläche des Trägerkörpers auf erhöhter Temperatur bleibt, und dort zu erhöhtem Umsatz führt, ist im gekühlten Bereich eine Kondensation des gebildeten Wassersdampfes möglich. Das kondensierte Wasser wird über einen Wasserablauf abgeführt.

Zweckmäßig ist es bei beiden Varianten der Erfindung den Reaktionsraum vor einer Einleitung von Gasgemisch mit Inertgas zu spülen, Patentanspruch 4.

Bevorzugt angewendet werden die erfindungsgemäßen Vorrichtungen nach Patentansprüchen 1 und 3 bei der Herstellung von Reinstwasser durch Elektrolyse. Das dabei entstehende Wasserstoff/Sauerstoff-Gasgemisch wird jeweils unmittelbar in den Reaktionsraum der Vorrichtungen eingeleitet und an der katalytisch wirksamen Oberfläche der Trägerkörper wieder zu Wasser umgesetzt.

Die Erfindung wird nachfolgend an Hand von Ausführungsbeispielen näher erläutert. Die Zeichnung zeigt schematisch:
Fig. 1 Reaktionsraum mit Flüssigkeitsbad, in das der Trägerkörper mit seiner katalytisch wirksamer Oberfläche eintaucht;
Fig. 2 Reaktionsraum mit katalytisch wirksamen materialbeschichteten Trägerkörper, der von einem Kühler gekühlt ist.

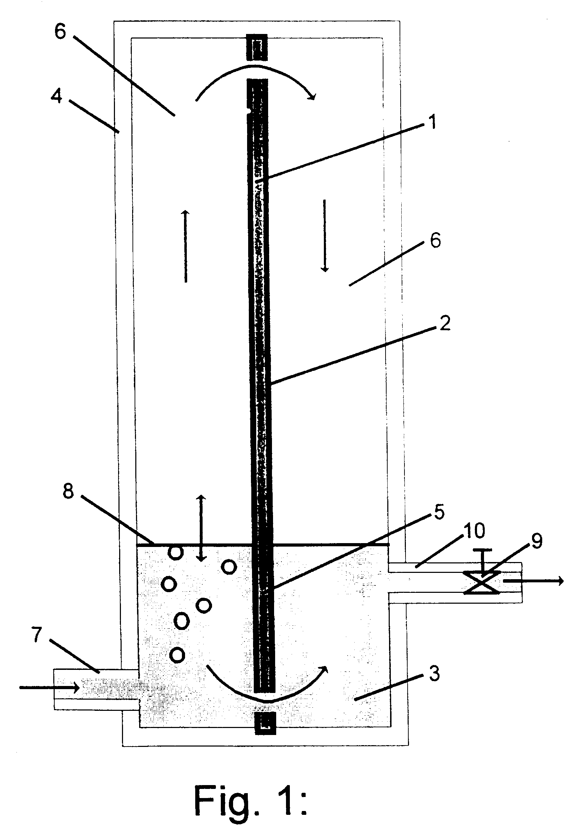

Figur 1 zeigt schematisch eine Vorrichtung, bei der ein Trägerkörper 1 mit seiner für eine Wasserstoffoxidation geeigneten katalytisch wirksamen Oberfläche 2 zu einem Teil in ein Flüssigkeitsbad 3 eintaucht. Im Ausführungsbeispiel ist der Trägerkörper senkrecht in einem Gehäuse 4 angeordnet, das Trägerkörper und Flüssigkeitsbad umschließt. Der Trägerkörper 1 ragt mit seinem unteren Teil 5 in das Flüssigkeitsbad 3 ein, sein oberer Teil befindet sich in einem Gasraum 6 des Gehäuses, der gasdicht oberhalb des Flüssigkeitsbades abgeschlossen ist.

Die Vorrichtung ist im Ausführungsbeispiel Bestandteil einer Anlage zur Gewinnung von Reinstwasser auf elektrochemischem Wege. In der Anlage wird elektrolytisch ein Wasserstoff/Sauerstoff enthaltendes Gasgemisch erzeugt, dessen Wasserstoffbestandteile in der Vorrichtung oxidiert und katalytisch zu Wasser umgesetzt werden. Das Flüssigkeitsbad 3 enthält in der Anlage bereits zuvor erzeugtes Reinstwasser.

Zugeführt wird das Wasserstoff-Sauerstoff-Gasgemisch über einen im Ausführungsbeispiel Reinstwasser führenden Flüssigkeitszulauf 7, der am Gehäuse 4 angeschlossen ist und in das Flüssigkeitsbad 3 unterhalb dessen Flüssigkeitsoberfläche 8 mündet.

Das über den Flüssigkeitszulauf 7 eingeleitete Gasgemisch steigt im Flüssigkeitsbad 3 auf und sammelt sich oberhalb der Flüssigkeitsoberfläche 8 im Gasraum 6 des Gehäuses 4. Das Gasgemisch kommt im Gasraum 6 mit der katalytisch wirksamen Oberfläche 2 des Trägerkörpers 1 in Berührung, so daß der im Gasgemisch enthaltene Wasserstoff mit dem Sauerstoff reagiert und exotherm katalytisch zu Wasserdampf umgesetzt wird. Die sich dabei entwickelnde Reaktionswärme heizt Gasraum 6 und Trägerkörper 1 auf, wobei der Trägerkörper seine Wärme über seinen unteren Teil 5 in das Flüssigkeitsbad 3 und die das Flüssigkeitsbad durchströmende Flüssigkeit ableitet. Die Flüssigkeitsmenge, die durch das Flüssigkeitsbad geleitet wird und die Wärme transportiert, ist so eingestellt, daß die Temperatur des Flüssigkeitsbades unterhalb der Kondensationtemperatur des im Gasraum gebildeten Wassers gehalten wird und der katalytisch gebildete Wasserdampf zumindest an der Flüssigkeitsoberfläche 8, aber auch auf der Oberfläche 2 des Trägerkörpers kondensieren kann, soweit zumindest in Teilbereichen der Oberfläche die Oberflächentemperatur die Kondensationstemperatur nicht überschreitet.

In Folge der Kondensation des im Gasraum 6 katalytisch gebildeten Wasserdampfes nimmt das Gasvolumen im Gasraum ab, so daß bei unverändert bleibendem Druck im Flüssigkeitsbad der Flüssigkeitsspiegel im Gehäuse 4 ansteigt. Über den Flüssigkeitszulauf 7 nachströmendes Wasser/Gasgemisch kann den Flüssigkeitsspiegel im Gehäuse wieder verändern. Ein mit einem Ventil 9 versehener Flüssigkeitsablauf 10 ist am Gehäuse 4 so angeschlossen, daß er in gleicher Weise wie der Flüssigkeitszulauf 7 unterhalb der Flüssigkeitsoberfläche 8 des Flüssigkeitsbades 3 mündet. Der Druck im Gehäuse ist mit dem Ventil 9 regulierbar.

Die in Figur 1 wiedergegebene Vorrichtung wirkt selbstregulierend. Steigt beispielsweise die Wirksamkeit der katalytischen Oberfläche durch Temperaturerhöhung infolge Erwärmung des Trägerkörpers durch die frei werdende Reaktionswärme an, so nimmt das Gasvolumen infolge hoher Umsatzrate verstärkt ab, und der dabei steigende Wasserspiegel sorgt für eine Abfuhr einer größeren Wärmemenge. Dies verhindert einen weiteren Temperaturanstieg an der katalytisch wirksamen Oberfläche und läßt die Umsatzrate sinken. Wird erneut Gasgemisch zugefuhrt, so sinkt der Wasserspiegel wieder und an der nunmehr wieder frei werdenden katalytischen Oberfläche wird ein größerer Gasanteil umgesetzt und Reaktionswärme frei. Sind die äußeren Bedingungen einschließlich der das Flüssigkeitsbad durchströmenden Flüssigkeitsmenge konstant, so stellt sich ein stabiler Zustand zwischen zugeführter und rekombinierter Gasmenge ein.

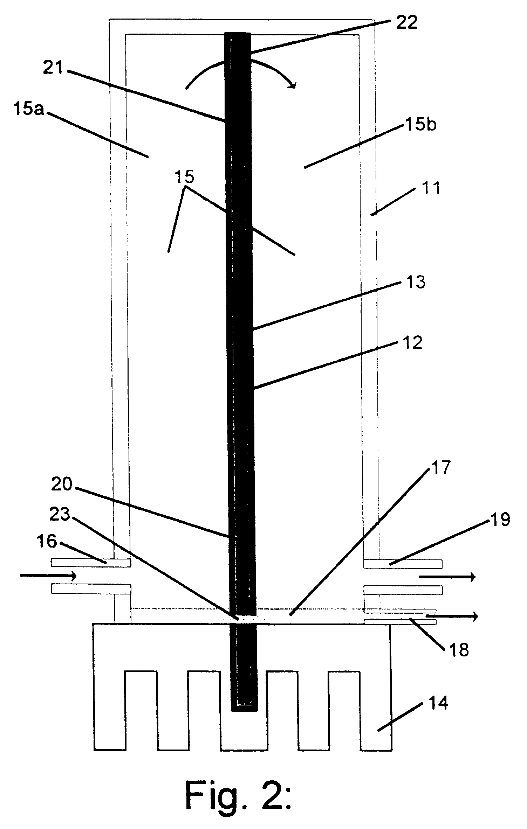

In Figur 2 ist schematisch eine Vorrichtung wiedergegeben, bei der in einem Gehäuse 11 ein Trägerkörper 12, der eine die Wasserstoffoxidation katalytisch beeinflußende Oberfläche 13 aufweist, mit einem Kühlkörper 14 wärmeleitend verbunden ist. Der Trägerkörper 12 ist im Gehäuse 11 in einem Gasraum 15 angeordnet, in den Wasserstoff und Sauerstoff enthaltendes Gasgemisch über eine Gaszuleitung 16 einströmen kann. An der Oberfläche 13 des Trägerkörpers 12 werden die mit dem Gasgemisch eingeführten Anteile von Wasserstoff und Sauerstoff katalytisch umgesetzt, die bei dieser exothermen Reaktion frei werdende Reaktionswärme heizt Gasraum und Trägerkörper auf. Der Trägerkörper 12 wird vom Kühlkörper 14 gekühlt, es wird zumindest in Teilbereichen des Trägerkörpers, die sich nahe am Kühlkörper befinden, eine Temperatur eingestellt, die unterhalb der Kondensationstemperatur von Wasserdampf liegt. In solchen Bereichen des Trägerkörpers und auf der Oberfläche des Kühlkörpers 14, soweit sich dieser in den Gasraum 15 erstreckt, kondensiert der an der katalytischen Trägerkörperoberfläche im Gasraum gebildete Wasserdampf. Im Ausführungsbeispiel nach Figur 2 ist der Trägerkörper senkrecht im Gehäuse angeordnet, so daß das Kondenswasser an der Oberfläche 13 des Trägerkörpers nach unten abfließen kann und sich in einer Gehäusewanne 17 sammelt, aus der es über einen Wasserablauf 18 abströmt.

Der Gasraum 15 im Gehäuse 11 wird vom Trägerkörper 12 in zwei Raumbereiche 15a, 15b getrennt. Der Raumbereich 15a dient dem Zustrom des Wasserstoff/Sauerstoff-Gasgemisches über die Gaszuleitung 16, am Raumbereich 15b ist eine Gasabzugsleitung 19 für das Restgasgemisch angeschlossen, das nach katalytischer Reaktion des vom Gasgemisch mitgeführten Wasserstoffs und Sauerstoffs und deren Umsetzung zu Wasser und nach Kondensation zumindest eines Teils des gebildeten Wasserdampfes verbleibt. Der Trägerkörper 12 ist derart im Gehäuse 11 eingesetzt, daß das zuströmende Gasgemisch die katalytisch wirksame Oberfläche 13 des Trägerkörpers möglichst vollständig umströmt. Im Ausführungsbeispiel ist hierzu folgendes vorgesehen:
- Über die Gaszuleitung 16 wird das Gasgemisch in den Gasraumbereich 15a derart eingeleitet, daß es den Trägerkörper zunächst an seinem Ende 20 anströmt, das mit dem Kühlkörper 14 verbunden ist.
- An seinem, dem Kühlkörper 14 entgegengesetzten Ende 21 weist der Trägerkörper 12 Durchströmöffnungen 22 auf, durch die das Gasgemisch nach Durchströmen des Raumbereiches 15a des Gasraums 15 in den Raumbereich 15b überführt wird.
- Die im Raumbereich 15b angeschlossene Gasabzugsleitung 19 befindet sich wieder am Ende 20 des Trägerkörpers 12, so daß auch im Raumbereich 15b die gesamte Oberfläche des Trägerkörpers vom den Gasraum 15 durchströmenden Gasgemisch kontaktiert wird.
- Am Ende 20 des Trägerkörpers 12 befindet sich auch eine Öffnung 23 für aus dem Raumbereich 15a in den Raumbereich 15b fließendes kondensiertes Wasser. Die Öffnung 23 ist unterhalb des Flüssigkeitsspiegels der Flüssigkeit in der Gehäusewanne 17 vorgesehen.

In den Ausführungsbeispielen nach Figuren 1 und 2 bestehen die Trägerkörper aus wärmeleitendem Material, insbesondere Metallblechen, beispielsweise rostfreiem Edelstahl, die mit Platin (Pt) oder Palladium (Pd) oder Legierungen dieser Metalle als Katalysatoren beschichtet sind. Es können im Gehäuse mehrere Trägerkörper angeordnet sein, so daß eine Zwangsführung für das Gasgemisch (und eine Zwangsführung für das Wasser) entsteht. Der Umsatz in der Vorrichtung kann auf diese Weise verbessert werden.

Die Werkstoffwahl für den Trägerkörper und dessen Abmessungen sind dem jeweiligen Anwendungsfall entsprechend, insbesondere dem notwendigen Wärmetransport anzupassen.

In einer Vorrichtung nach Figur 1 wurde ein 1 mm starkes, mit Pd beschichtetes Edelstahlblech mit einer Gesamtoberfläche von 300 cm² eingesetzt. Ein- und Auslauf für den Reinstwasserstrom waren so angeordnet, daß der Trägerkörper zu einem Drittel seiner Oberfläche von Wasser umspült wurde. In den Gasraum wurde nach Spülen mit Inertgas ein Gasgemisch eingeleitet, das 2,6 l/h Wasserstoff (H₂), 1,3 l/h Sauerstoff (0₂), 0,74 l/h Stickstoff (N₂) und 0,13 l/h Wasserdampf (H₂0) enthielt. Durch die beschriebene Selbstregulierung der Reaktionsführung ergaben sich für die heißesten Stellen der Oberfläche des Trägerkörpers Werte zwischen 70 bis 150 °C. Die wasserbedeckten Oberflächenbereiche wiesen Raumtemperatur auf. Das über den Flüssigkeitsablauf 10 abströmende Restgasgemisch wurde von der Flüssigkeit abgetrennt und analysiert. Es wurden im Restgasgemisch noch 0,189 l/h H₂, 0,158 l/h O₂, 0,765 l/h N₂ und 0,03 l/h H₂0 gemessen. Bezogen auf das einströmende Gasgemisch ergaben sich damit Umsätze von 93% für H₂, 88% für 0₂.

### Bezugszeichenliste

- Trägerkörper: 1
- Oberfläche: 2
- Flüssigkeitsbad: 3
- Gehäuse: 4
- Unterer Teil des Trägerkörpers: 5
- Gasraum: 6
- Flüssigkeitszulauf: 7
- Flüssigkeitsoberfläche: 8
- Ventil: 9
- Flüssigkeitsablauf: 10
- Gehäuse: 11
- Trägerkörper: 12
- Oberfläche: 13
- Kühlkörper: 14
- Gasraum: 15
- Raumbereiche: 15a, 15b
- Gaszuleitung: 16
- Gehäusewanne: 17
- Wasserablauf: 18
- Gasabzugsleitung: 19
- Ende des Trägerkörpers: 20, 21
- Durchströmöffnung: 22
- Öffnung: 23

## Patentansprüche

1. Vorrichtung zur Entfernung von Wasserstoff aus einem Gasgemisch, das freien Wasserstoff und Sauerstoff enthält, durch katalytische Oxidation des Wasserstoffs in einem Reaktionsraum (6) mit einem im Reaktionsraum befestigten, auf seiner Oberfläche (2) mit katalytisch wirksamen Material beschichteten Trägerkörper (1), der zur Ableitung von Reaktionswärme dient, sowie mit einem Zugang (7) für das Gasgemisch zum Reaktionsraum und einem Ausgang (10) für nach Oxidation des Wasserstoffs verbleibendes Restgas,
**dadurch gekennzeichnet**,
daß der Trägerkörper (1) mit einem Teil (5) seiner katalytisch wirksamen Oberfläche (2) in ein Flüssigkeitsbad (3) eintaucht, das eine Temperatur unterhalb der Kondensationstemperatur des im Reaktionsraum (6) gebildeten Wasserdampfes aufweist, wobei ein Flüssigkeitszulauf (7) für das Flüssigkeitsbad (3) zugleich als Zugang für das in den Reaktionsraum einzuführende Gasgemisch und ein Flüssigkeitsablauf (10) zugleich als Ausgang für das Restgas dient, und wobei sowohl der Flüssigkeitszulauf (7) als auch der Flüssigkeitablauf (10) unterhalb des Flüssigkeitsspiegels (8) im Reaktionsraum (6) angeordnet sind, und der Druck im Reaktionsraum regulierbar ist.

2. Vorrichtung nach Anspruch 1, **dadurch gekennzeichnet**, daß der Trägerkörper in ein Wasserbad (3) eintaucht.

3. Vorrichtung zur Entfernung von Wasserstoff aus einem Gasgemisch, das freien Wasserstoff und Sauerstoff enthält, durch katalytische Oxidation des Wasserstoffs in einem Reaktionsraum (15, 15a, 15b) mit einem im Reaktionsraum befestigten, auf seiner Oberfläche (13) mit katalytisch wirksamen Material beschichteten Trägerkörper (12), der zur Ableitung von Reaktionswärme dient, sowie einem Zugang (16) für das Gasgemisch zum Reaktionsraum und einem Ausgang (19) für nach Oxidation des Wasserstoffs verbleibendes Restgas,
**dadurch gekennzeichnet**,
daß der Trägerkörper (12) mit einem Kühler (14) zur Wärmeabfuhr verbunden ist, der einen Teil der katalytisch wirksamen Oberfläche (13) auf eine Temperatur kühlt, die unterhalb der Kondensationstemperatur des im Reaktionsraum (15) gebildeten Wasserdampfes liegt, und daß der Reaktionsraum (15) einen Ablauf für Kondenswasser (18) aufweist.

4. Vorrichtung nach einem der vorgehenden Ansprüche, **dadurch gekennzeichnet**, daß der Reaktorraum (6, 15) vor Einleiten des Gasgemisches mit Inertgas gespült wird.

5. Anwendung einer Vorrichtung nach einem der vorhergehenden Ansprüche bei der elektrochemischen Herstellung von Reinstwasser zur Gewinnung des Reinstwassers.

## Claims

1. A device for removing hydrogen from a gas mixture which contains free hydrogen and oxygen by the catalytic oxidation of the hydrogen in a reaction space (6), comprising a support body (1), which is fixed in the reaction space, which is coated on its surface (2) with a catalytically active material and which serves for the dissipation of the heat of reaction, and comprising an inlet (7) for the gas mixture to the reaction space and an outlet (10) for the residual gas which remains after the oxidation of the hydrogen,
characterised in that
a part (5) of the catalytically active surface (2) of the support body (1) dips into a liquid bath (3) which is at a temperature below the condensation temperature of the water vapour formed in the reaction space (6), wherein a liquid inlet (7) for the liquid bath (3) at the same time serves as an inlet for the gas mixture to be introduced into the reaction space and a liquid outlet (10) at the same time serves as an outlet for the residual gas, and wherein both the liquid inlet (7) and the liquid outlet (10) are disposed below the liquid level (8) in the reaction space (6), and the pressure in the reaction space can be regulated.

2. A device according to claim 1, characterised in that the support body dips into a water bath (3).

3. A device for removing hydrogen from a gas mixture which contains free hydrogen and oxygen by the catalytic oxidation of the hydrogen in a reaction space (15, 15a, 15b), comprising a support body (12), which is fixed in the reaction space, which is coated on its surface (13) with a catalytically active material and which serves for the dissipation of the heat of reaction, and comprising an inlet (16) for the gas mixture to the reaction space and an outlet (19) for the residual gas which remains after the oxidation of the hydrogen,
characterised in that
the support body (12) is attached to a cooling device (14) for the dissipation of heat which cools part of the catalytically active surface (13) to a temperature which is below the condensation temperature of the water vapour formed in the reaction space (15), and that the reaction space (15) has an outlet (18) for water of condensation.

4. A device according to any one of the preceding claims, characterised in that the reactor space (6, 15) is flushed with inert gas before introducing the gas mixture.

5. The use of a device according to any one of the preceding claims for the electrochemical production of high-purity water in order to obtain high-purity water.

## Revendications

1. Dispositif d'élimination de l'hydrogène d'un mélange gazeux qui renferme de l'hydrogène libre et de l'oxygène, par oxydation catalytique de l'hydrogène dans un espace (6) de réaction, ayant un support (1) fixé dans l'espace de réaction, revêtu sur sa surface (2) de matière efficace du point de vue catalytique et servant à l'évacuation de la chaleur de réaction ainsi qu'une entrée (7) pour le mélange gazeux dans l'espace de réaction et une sortie (10) pour le gaz résiduel subsistant après l'oxydation de l'hydrogène,
caractérisé en ce que le support (1) plonge, par une partie (5) de sa surface (2) efficace du point de vue catalytique, dans un bain (3) de liquide qui a une température inférieure au point de condensation de la vapeur d'eau formée dans l'espace (6) de réaction, une entrée (7) de liquide pour le bain (3) de liquide servant en même temps d'entrée pour le mélange gazeux à introduire dans l'espace de réaction et une sortie (10) de liquide servant en même temps de sortie pour le gaz restant et tant l'entrée (7) de liquide que la sortie (10) de liquide étant disposées en dessous du niveau (8) du liquide dans l'espace (6) de réaction et la pression dans l'espace de réaction peut être réglée.

2. Dispositif suivant la revendication 1 caractérisé en ce que le support plonge dans un bain (3) d'eau.

3. Dispositif d'élimination de l'hydrogène d'un mélange gazeux qui renferme de l'hydrogène libre et de l'oxygène par oxydation catalytique de l'hydrogène dans un espace (15, 15a, 15b) de réaction, ayant un support (12) fixé dans l'espace de réaction, revêtu sur sa surface (13) d'une matière efficace du point de vue catalytique et servant à évacuer de la chaleur de réaction, ainsi qu'une entrée (16) pour le mélange gazeux dans l'espace de réaction et une sortie (19) pour le gaz restant subsistant après l'oxydation de l'hydrogène
caractérisé
en ce que le support (12) est relié à un dispositif (14) de refroidissement, destiné à évacuer de la chaleur et refroidissant une partie de la surface (13) efficace du point de vue catalytique à une température qui est inférieure au point de condensation de la vapeur d'eau qui se forme dans l'espace (15) de réaction et en ce que l'espace (15) de réaction a une sortie pour l'eau (18) de condensation.

4. Dispositif suivant l'une des revendications précédentes, caractérisé en ce que l'espace (6, 15) de réaction est balayé par du gaz inerte, avant l'introduction du mélange gazeux.

5. Utilisation d'un dispositif suivant l'une des revendications précédentes pour la préparation par voie électrochimique d'eau extra pure pour obtenir de l'eau extra pure.
